(19) Europäisches Patentamt
European Patent Office
Office européen des brevets

(11) Veröffentlichungsnummer: **0 002 005**
**B1**

# (12) EUROPÄISCHE PATENTSCHRIFT

(45) Veröffentlichungstag der Patentschrift: **19.01.83**

(51) Int. Cl.[3]: **C 08 G 73/06,** C 08 G 63/20, C 08 L 101/00

(21) Anmeldenummer: **78101286.9**

(22) Anmeldetag: **02.11.78**

(54) **Verfahren zur Endgruppenblockierung polymerer Polyalkylpiperidinderivate, die so erhaltenen endgruppenblockierten Produkte und ihre Verwendung als Lichtschutzmittel für Kunststoffe.**

(30) Priorität: **10.11.77 CH 13722/77**

(43) Veröffentlichungstag der Anmeldung: **30.05.79 Patentblatt 79/11**

(45) Bekanntmachung des Hinweises auf die Patenterteilung: **19.01.83 Patentblatt 83/3**

(84) Benannte Vertragsstaaten: **CH DE FR GB**

(56) Entgegenhaltungen:
**DE-A-2 636 143**
**DE-A-2 636 144**
**DE-A-2 752 740**
**FR-A-943 927**
**FR-A-1 031 569**
**US-A-4 001 189**

(73) Patentinhaber: **CIBA-GEIGY AG, Patentabteilung Postfach, CH-4002 Basel (CH)**

(72) Erfinder: **Rody, Jean, Dr., Bäumlihofstrasse 148, CH-4058 Basel (CH)**
Erfinder: **Nikles, Erwin, Dr., Bodenackerstrasse 14, CH-4410 Liestal (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 005 B1

# Verfahren zur Endgruppenblockierung polymerer Polyalkylpiperidinderivate, die so erhaltenen endgruppenblockierten Produkte und ihre Verwendung als Lichtschutzmittel für Kunststoffe

Die DE-OS 2 719 131 beschreibt Kondensations- und Additionspolymere, deren wiederkehrende Struktureinheit einen Polyalkylpiperidinrest der Formel

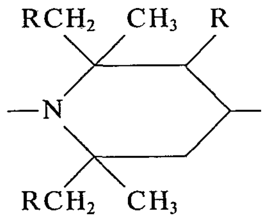 oder 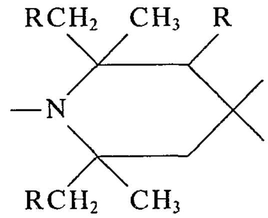

enthält oder durch eine Polyalkylpiperidin-Seitengruppe der Formel

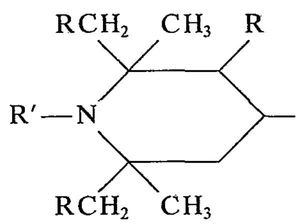 oder 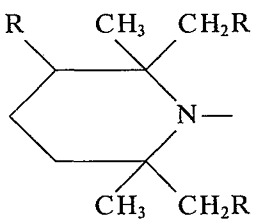

substituiert ist, worin R Wasserstoff oder Alkyl mit 1–5 C-Atomen und R' Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet sowie Mischpolymere untereinander oder mit Polyalkylpiperidin-freien Komponenten, welche als Lichtschutzmittel für Kunststoffe verwendet werden können.

Vorzugsweise handelt es sich bei den dort beanspruchten, als Lichtschutzmittel verwendbaren Polymeren um Polyester, Polyamide, Polyurethane, Polyharnstoffe, Polysilylester, Polyäther, Polyamine, Polycarbonate und deren Mischpolymere, deren wiederkehrende Moleküleinheit einen Polyalkylpiperidinrest enthält, insbesondere um solche Polymere, die durch die allgemeinen Formeln I–VII dargestellt werden können,

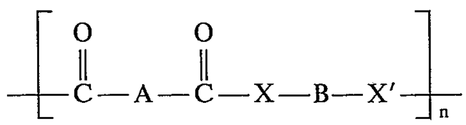 (I)

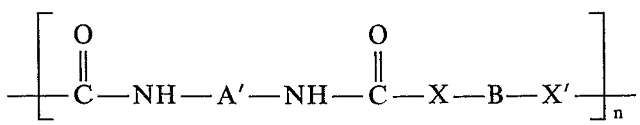 (Ia)

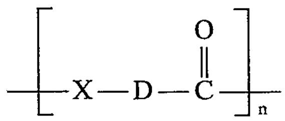 (II)

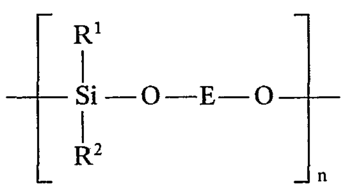 (III)

$$-[O-A-O-F]_n- \qquad (IV)$$

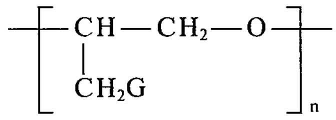

(V)

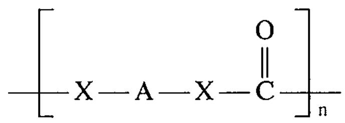

(VI)

$$-\!\!\left[NH-A-NH-F\right]_n\!\!-$$ (VIa)

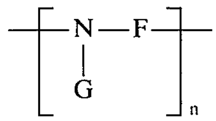

(VII)

worin X und X' Sauerstoff oder NY bedeuten, Y Wasserstoff, Alkyl, Cycloalkyl, Aralkyl, Aryl oder einen Polyalkylpiperidinrest bedeutet, $R^1$ und $R^2$ Methyl, Äthyl oder Phenyl bedeuten, A, A', B, B', D, E und F zweiwertige organische Reste und G einen einwertigen organischen Rest bedeuten, wobei in jeder der Formeln I bis VII mindestens einer der Reste Y, A, A', B, B', D, E, F, G einen Polyalkylpiperidinrest enthält. Der Index n stellt einen Wert von 2–50 dar, so daß es sich um Polymere von relativ niedrigem Molekulargewicht handelt. Soweit diese Polymeren linear sind, tragen sie Endgruppen, die vorwiegend den funktionellen Gruppen der für ihre Herstellung verwendeten Ausgangsmaterialien entsprechen. Beispielsweise haben Polyester, die aus Diolen und Dicarbonsäuren hergestellt werden, Hydroxyl- und Carboxylendgruppen. Je nach dem Molverhältnis der verwendeten Komponenten können dabei die Endgruppen vorwiegend Hydroxylgruppen oder vorwiegend Carboxylgruppen sein oder es liegen die beiden Arten von Endgruppen in etwa der gleichen Menge vor. Andere Arten von Endgruppen, die bei den Polymeren der Formeln I bis VII vorliegen können, sind Aminogruppen, Niederalkylcarboxylatgruppen, Halogengruppen, Isocyanatgruppen oder Epoxygruppen. Solche Endgruppen können sich bei der Verwendung der Polymeren als Lichtschutzmittel in Kunststoffen nachteilig auswirken, vor allem, wenn der Polymerisationsgrad n niedrig ist und damit der mengenmäßige Anteil der Endgruppen relativ hoch ist. Bei der formgebenden Verarbeitung der mit diesen polymeren Lichtschutzmitteln stabilisierten Kunststoffe können Temperaturen auftreten, bei denen die Endgruppen nicht mehr stabil sind. Es kann eine unerwünschte Reaktion mit dem Kunststoff eintreten oder eine teilweise Zersetzung des polymeren Lichtschutzmittels erfolgen. Dadurch können Verfärbungen auftreten, die Lichtschutzwirkung kann vermindert werden oder die Eigenschaften der Kunststoffe können verändert werden.

In Weiterbildung der in der DE-OS 2 719 131 beschriebenen Erfindung wurde gefunden, daß die nachteiligen Wirkungen solcher Endgruppen dadurch ausgeschaltet werden können, daß man die Endgruppen während oder nach der Herstellung der Polymeren durch Zusatz von Verbindungen, die mit den Endgruppen monofunktionell reagieren, blockiert. Beispielsweise können bei einem Polyester, der sowohl Hydroxyl- wie Carboxylgruppen trägt, die Hydroxylgruppen dadurch blockiert werden, daß man den fertigen Polyester mit einer Monocarbonsäure oder einem funktionellen Derivat davon (z. B. Säurechlorid oder Säureanhydrid) reagieren läßt oder daß man bei der Herstellung aus einer Dicarbonsäure und einem Diol eine kleine Menge einer Monocarbonsäure oder deren Derivat zusetzt. Analog können auch Aminogruppen durch Monocarbonsäuren oder deren funktionelle Derivate blockiert werden.

Hydroxyl- und Aminogruppen können aber auch durch Monochlortriazine, durch Monoepoxyde, oder durch Monoisocyanate blockiert werden. Isocyanat-Endgruppen und Epoxyd-Endgruppen können durch Monoalkohole oder durch primäre oder sekundäre Monoamine blockiert werden. Halogenendgruppen können durch Monoamine, durch Alkalialkoxide oder durch Trialkylphosphite blockiert werden.

Monofunktionell können gegenüber primären Aminogruppen auch cyclische Anhydride von Dicarbonsäuren reagieren, indem sie eine cyclische Imidgruppe bilden.

Wird die Endgruppenblockierung durch Zusatz einer monofunktionellen Verbindung während der Herstellung der polymeren Lichtschutzmittel durchgeführt, so kann man dadurch das Molekulargewicht der Produkte regulieren. Dies kann dann von technischem Interesse sein, wenn man ein Produkt von begrenztem Molekulargewicht bekommen will. Dies ist aber auch von Interesse, um bei der technischen Herstellung solcher Lichtschutzmittel Produkte mit gleichbleibendem Molekulargewicht zu erhalten.

Gegenstand der Erfindung ist daher ein Verfahren zur Endgruppenblockierung von als Lichtschutzmittel verwendbaren Kondensations- und Additionspolymeren, deren wiederkehrende Struktureinheit einen Polyalkylpiperidinrest der Formel

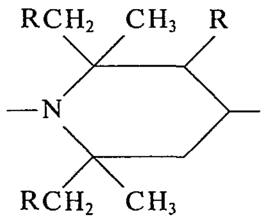

oder

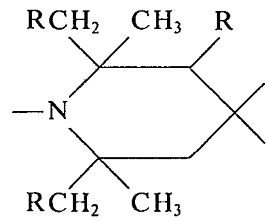

enthält oder durch eine Polyalkylpiperidin-Seitengruppe der Formel

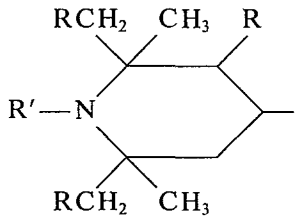

oder

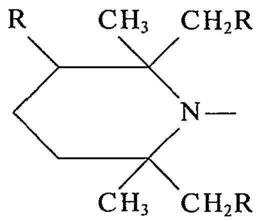

substituiert ist, worin R Wasserstoff oder Alkyl mit 1–5 C-Atomen und R' Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet, oder deren Mischpolymeren, das dadurch gekennzeichnet ist, daß man wähernd der Herstellung des Polymeren eine monofunktionelle Verbindung zusetzt oder daß man das fertige Polymere mit einer monofunktionellen Verbindung umsetzt.

Unter Kondensations- und Additionspolymeren werden solche Polymere verstanden, die durch Polykondensation oder Polyaddition hergestellt werden, beispielsweise Polyester, Polyamide, Polyurethane, Polyharnstoffe, Polyäther, Polyamine oder Polyamino-triazine.

Unter Mischpolymeren sind solche zu verstehen, die verschiedenen Polymertypen angehören, wie z. B. Polyesteramide, Polyäther-amine, Polyamid-urethane oder Polyester-urethane, oder solche, die demselben Polymertyp angehören, aber aus verschiedenen Struktureinheiten bestehen, wie z. B. ein Polyester aus einem Diol und zwei verschiedenen Dicarbonsäuren. Bei den Mischpolymeren muß mindestens eine Struktureinheit einen Polyalkylpiperidinrest enthalten, die andere Struktureinheit kann frei von Polyalkylpiperidinresten sein.

Die Polyalkylpiperidinreste können an den Rest des Polymermoleküls durch die verschiedensten Arten von Bindungen gebunden sein, beispielsweise durch C–C, N–C oder O–C-Bindungen. Dabei kann der Piperidinring durch 1, 2 oder 3 Bindungen an den Rest des Polymermoleküls gebunden sein. Die Piperidinreste tragen mindestens 4 Alkylgruppen, bevorzugt handelt es sich um 2,2,6,6-Tetramethylpiperidinreste. Der Substituent am Piperidinstickstoff R' ist bevorzugt Wasserstoff, Alkyl mit 1–6 C-Atomen, Allyl, Benzyl oder Acetyl.

Die erfindungsgemäß zur Endgruppenblockierung verwendete monofunktionelle Verbindung kann beispielsweise eine Monocarbonsäure oder deren funktionelles Derivat sein, ein Monoalkohol oder dessen Alkaliverbindung, ein primäres oder sekundäres Monoamin, ein cyclisches Anhydrid einer Dicarbonsäure, ein Monoisocyanat, ein Monochlortriazin oder ein Monoepoxyd.

Bevorzugt verwendet man

1. eine Monocarbonsäure oder deren Ester, Halogenid oder Anhydrid;
2. einen Monoalkohol oder dessen Alkaliverbindung;
3. ein primäres oder sekundäres Monoamin;
4. ein Monoisocyanat;
5. ein cyclisches Anhydrid einer Dicarbonsäure;
6. ein Monochlor-1,3,5-triazin.

Beispiele für erfindungsgemäß verwendbare Monocarbonsäuren oder deren Derivate sind Essigsäure, Acetylchlorid, Essigsäureanhydrid, Propionsäuremethylester, Propionsäureanhydrid, Propionylbromid, Butyrylchlorid, Benzoylchlorid, Benzoesäureäthylester, Pivalinsäuremethylester, 2-Äthylcapronsäuremethylester.

Beispiele für verwendbare Alkohole oder deren Alkaliverbindungen sind Methanol, Äthanol, Isopropanol und Natriumäthoxid oder Kalium-tert.-butoxid. Bevorzugt werden jedoch höhere Alkohole verwendet wie n-Octanol, 2-Äthoxyäthanol, Cyclohexanol, Laurylalkohol, Stearylalkohol, technische Mischungen von höheren Alkoholen, Benzylalkohol usw.

Beispiele für verwendbare Monoamine sind Dipropylamin, Butylamin, Dibutylamin, Dodecylamin, Cyclohexylamin oder Methyl-cyclohexylamin.

Beispiele für verwendbare Monoisocyanate sind Methylisocyanat, n-Octylisocyanat, n-Dodecylisocyanat, Phenylisocyanat oder Cyclohexylisocyanat.

Beispiele für verwendbare cyclische Anhydride von Dicarbonsäuren sind Phthalsäure-, Hexahydrophthalsäure-, Maleinsäure-, Bernsteinsäure- oder Bicyclo[2.2.1]heptan-2,3-dicarbonsäureanhydrid.

Beispiele für verwendbare Monochlortriazine sind 2,4-Diphenoxy-6-chlor-1,3,5-triazin, 2,4-Bis-(dimethylamino)-6-chlor-1,3,5-triazin oder 2-Methoxy-4-dibutylamino-6-chlor-1,3,5-triazin.

Weitere zum Endgruppenblockieren verwendbare monofunktionelle Verbindungen sind beispielsweise Sulfonsäurechloride wie z. B. Methansulfonchlorid, Dodecan-1-sulfochlorid, Benzolsulfochlorid oder p-Toluolsulfochlorid, Monoepoxide wie z. B. Propylenoxid, 1-Butenoxid, Styroloxid, Butylglycidyläther oder Phenylglycidyläther, oder Monochlorsilane wie z. B. Trimethylchlorsilan oder Triphenylchlorsilan.

Die verwendeten monofunktionellen Verbindungen können auch monofunktionelle Derivate von Polyalkylpiperidinen sein. Beispielsweise kann als Monoalkohol 4-Hydroxy-1,2,2,6,6-pentamethylpiperidin, 4-Hydroxy-2,2,6,6-tetramethylpiperidin oder 1-Hydroxyäthyl-2,2,6,6-tetramethylpiperidin verwendet werden oder als Monoamin 4-Methylamino-1,2,2,6,6-pentamethylpiperidin oder 4-(3'-Aminopropyloxy)-2,2,6,6-tetramethylpiperidin verwendet werden. Ferner kann man monofunktionell Triazine mit Piperidin-Substituenten verwenden, beispielsweise 2-Chlor-4,6-bis(2,2,6,6-tetramethyl-4-piperidylamino)-1,3,5-triazin, 2-Chlor-4,6-bis[N(2,2,6,6-tetramethyl-4-piperidyl)-butylamino]-1,3,5-triazin oder 2-Chlor-4-tert.-octylamino-6[N(2,2,6,6-tetramethyl-4-piperidyl)butylamino]-1,3,5-triazin verwenden. Der Aminostickstoff des Piperidinringes reagiert dabei unter den üblichen Bedingungen nicht im Sinne einer funktionellen Gruppe unter Blockierung einer Endgruppe, so daß die obengenannten Beispiele als monofunktionelle Verbindungen im Sinne der Erfindung aufzufassen sind.

Die Reaktionsbedingungen sind bestimmt durch die zur Polykondensation oder Polyaddition notwendigen Bedingungen. Der Zusatz der monofunktionellen endgruppenblockierenden Verbindung kann am Beginn der Polykondensation bzw. Polyaddition geschehen oder in deren Verlauf oder an deren Ende. Der Zusatz am Ende der Polykondensation kommt einer Umsetzung des fertigen Polymeren gleich, ohne daß dieses isoliert wird. Es kann in gewissen Fällen aber auch vorteilhaft oder notwendig sein, daß man zuerst das nicht endgruppenblockierte Polymer isoliert und in einem getrennten Reaktionsschritt mit der monofunktionellen Verbindung nachbehandelt.

Wenn in einem nicht endgruppenblockierten Polymer beide Endgruppen von der gleichen Art sind, so werden bei der Reaktion mit der monofunktionellen endgruppenblockierenden Verbindung beide Endgruppen blockiert. Sind die beiden Endgruppen verschieden, so kann man entweder eine monofunktionelle Verbindung verwenden, die beide Arten von Endgruppen blockiert, oder man blockiert nur die eine Endgruppe und läßt die andere unverändert, oder man verwendet zwei verschiedene monofunktionelle Verbindungen.

Wenn die monofunktionelle Verbindung am Beginn oder in einem relativ frühen Stadium der Polymerisation zugesetzt wird, so kann sie quantitativ endgruppenblockierend reagieren. Von der Menge der zugesetzten monofunktionellen Verbindung hängt das Molekulargewicht des blockierten Polymeren ab. Die verwendete Menge an monofunktioneller Verbindung richtet sich also nach dem gewünschten Molekulargewicht. Je kleiner der Polymerisationsgrad werden soll, desto mehr monofunktionelle Verbindung muß man verwenden.

Wird die monofunktionelle Verbindung am Ende der Polymerisation zugesetzt, so tritt dadurch im allgemeinen keine Veränderung des bereits erreichten Polymerisationsgrades ein. Es reagiert nur so viel von der monofunktionellen Verbindung als reaktive Endgruppen vorhanden sind, der Überschuß kann durch Destillation oder durch Fällung und Elution des Polymeren wieder entfernt werden. Die verwendete Menge an monofunktioneller Verbindung ist in solchen Fällen also nicht kritisch, man wird sie im Überschuß einsetzen.

Es ist jedoch auch möglich, daß die monofunktionelle Verbindung mit dem bereits gebildeten Polymer unter Abbau des Polymerisationsgrades reagiert, beispielsweise bei Umesterung eines Polyesters mit einem Monoalkohol oder einem Monocarbonsäurealkylester. In diesem Fall muß sich die verwendete Menge an monofunktioneller Verbindung ebenfalls nach dem gewünschten Molekulargewicht des Polymeren richten.

Gegenstand der Erfindung sind auch die Produkte des beschriebenen Verfahrens, nämlich die als Lichtschutzmittel verwendbaren endgruppenblockierten Kondensations- und Additionspolymere, deren wiederkehrende Struktureinheit einen Polyalkylpiperidinrest der Formel

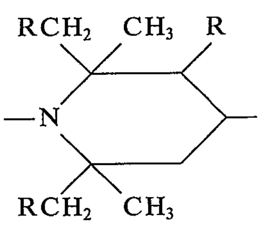

oder

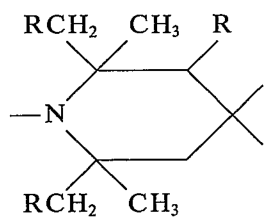

enthält oder durch eine Polyalkylpiperidin-Seitengruppe der Formel

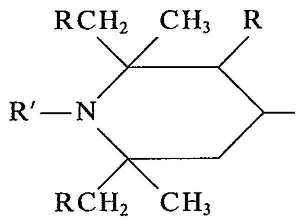

oder

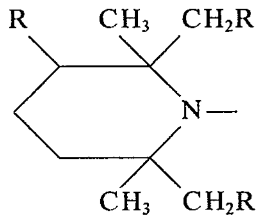

substituiert ist, worin R Wasserstoff oder Alkyl mit 1–5 C-Atomen und R′ Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet sowie deren Mischpolymere untereinander oder mit Polyalkylpiperidin-freien Komponenten, deren Endgruppen dadurch blockiert sind, daß bei ihrer Herstellung eine monofunktionelle Verbindung zugesetzt wurde oder daß sie nachträglich mit einer monofunktionellen Verbindung umgesetzt wurden.

Bevorzugt sind dabei Polyester, Polyamide, Polyurethane, Polyharnstoffe, Polyäther, Polyamine und Polyaminotriazine, die Polyalkylpiperidinreste enthalten.

Bevorzugt sind weiterhin solche Polymere, in deren Polyalkylpiperidinresten R Wasserstoff ist und R′ Wasserstoff, Alkyl mit 1–4 C-Atomen, Allyl, Benzyl oder Acetyl, insbesondere H oder $CH_3$ bedeutet.

Bevorzugt sind weiterhin Polyester, Polyamide und Polyesteramide der allgemeinen Formel VIII,

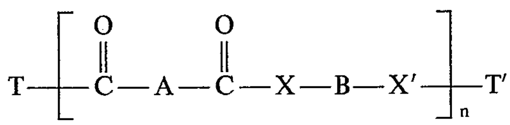

(VIII)

worin X und X′ Sauerstoff oder NY bedeuten und Y Wasserstoff, Alkyl mit 1–12 C-Atomen, Cyclohexyl, Aralkyl mit 7–9 C-Atomen, Phenyl oder einen Polyalkylpiperidinrest bedeutet, A und B zweiwertige organische Reste darstellen und mindestens einer von A, B und Y einen Polyalkylpiperidinrest enthält, n einen Wert von 2 bis etwa 50 bedeutet, T eine Endgruppe der Formel $-OH$ oder $-O(C_1-C_4\text{-Alkyl})$ ist und T′ eine blockierte Endgruppe der Formel

$$-CO-R^3,\ -CO-NH-R^4,\ -SO_2-R^5,\ -CH_2CH(OH)R^6 \text{ oder } -CH_2CH(OH)CH_2-O-R^7$$

bedeutet, worin $R^3$, $R^4$, $R^5$, $R^6$ und $R^7$ einwertige Kohlenwasserstoffreste darstellen, insbesondere worin $R^3$ $C_1-C_{12}$-Alkyl oder Phenyl, $R^4$ $C_1-C_{12}$-Alkyl, Cyclohexyl oder Phenyl, $R^5$ $C_1-C_4$-Alkyl, Phenyl oder Tolyl, $R^6$ Wasserstoff, Methyl, Äthyl oder Phenyl und $R^7$ $C_1-C_8$-Alkyl, Cyclohexyl oder Phenyl darstellen.

Solche Polymere der Formel VIII entstehen durch Polykondensation von Dicarbonsäuren oder deren Alkylestern mit Diolen, Diaminen oder Aminoalkoholen im stöchiometrischen Verhältnis und gleichzeitiger oder anschließender Zugabe einer monofunktionellen Verbindung, die den Rest T′ als Endgruppe einführt.

Bevorzugt sind weiterhin Polyester, Polyamide und Polyesteramide der Formel IX

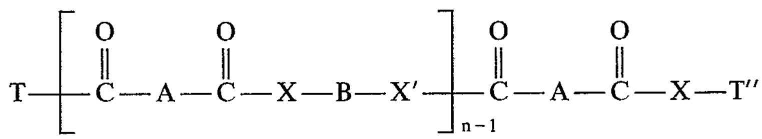

(IX)

worin X, X′, A, B, n und T die oben angegebene Bedeutung haben und T″ ein einwertiger Kohlenwasserstoffrest, vorzugsweise $C_1-C_{12}$-Alkyl, Cyclohexyl, Benzyl, Phenyl oder Tolyl ist.

Solche Polymere der Formel IX entstehen durch Polykondensation von n Molen einer Dicarbonsäure oder deren Äthylestern und (n–1) Molen eines Diols, Diamins oder Aminoalkohols mit 1 Mol einer Monohydroxyl- oder Monoaminoverbindung T″–XH.

Die nach dem beschriebenen Verfahren endgruppenblockierten Polyalkylpiperidinreste enthaltenden Kondensations- und Additionspolymeren können als Lichtstabilisatoren für Kunststoffe verwendet werden und zeichnen sich dabei durch hohe Extraktionsbeständigkeit aus. Polymere Substrate, die auf diese Weise gegen Lichtabbau stabilisiert werden können, sind z. B. die folgenden:

1. Polymere von Mono- und Diolefinen, beispielsweise Polyäthylen (das gegebenenfalls vernetzt sein kann), Polypropylen, Polyisobutylen, Polymethylbuten-1, Polymethylpenten-1, Polyisopren oder Polybutadien.

2. Mischungen der unter 1) genannten Polymeren, z. B. Mischungen von Polypropylen mit Polyäthylen oder mit Polyisobutylen.
3. Copolymere von Mono- und Diolefinen, wie z. B. Äthylen-Propylen-Copolymere, Propylen-Buten-1-Copolymere, Propylen-Isobutylen-Copolymere, Äthylen-Buten-1-Copolymere sowie Terpolymere von Äthylen mit Propylen und einem Dien, wie Hexadien, Dicyclopentadien oder Äthylidennorbornen.
4. Polystyrol.
5. Copolymere von Styrol oder α-Methylstyrol mit Dienen oder Acrylderivaten, wie z. B. Styrol-Butadien, Styrol-Acrylnitril, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Äthylen-Propylen-Dien-Terpolymeren, sowie Block-Copolymere des Styrols, wie z. B. Styrol-Butadien-Styrol, Styrol-Isopren-Styrol oder Styrol-Äthylen/Butylen-Styrol.
6. Graft- oder Pfropfcopolymere von Styrol, wie z. B. Styrol auf Polybutadien, Styrol und Acrylnitril auf Polybutadien sowie deren Mischungen mit den unter 5) genannten Copolymeren, wie sie als sogenannte ABS-Polmyere bekannt sind.
7. Halogenhaltige Polymere, wie z. B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitril.
9. Polymere, die sich von ungesättigten Alkoholen und Aminen bzw. deren Acrylderivaten oder Acetalen ableiten, wie Polyvinylalkohol, Polyvinylacetat-, -stearat, -benzoat, -maleat, Polyvinylbutyral, Polyallylphthalat, Polyallylmelamin und deren Copolymere mit anderen Vinylverbindungen, wie Äthylen/Vinylacetat-Copolymere.
10. Homo- und Copolymere von Epoxyden, wie Polyäthylenoxyd, Polypropylenoxyd oder deren Copolymere mit Bisgycidyläthern.
11. Polyacetale, wie Polyoxymethylen, sowie solche Polyoxymethylene, die als Comonomeres Äthylenoxyd enthalten.
12. Polyphenylenoxyde.
13. Polyurethane und Polyharnstoffe.
14. Polycarbonate.
15. Polysulfone.
16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.
17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylolcyclohexanterephthalat, sowie Block-Polyäther-ester, die sich von Polyäthern mit Hydroxylendgruppen und Dicarbonsäuren ableiten.
18. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.
19. Alkydharze, wie Glycerin-Phthalsäure-Harze und deren Gemische mit Melamin-Formaldehydharzen.
20. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten, wie auch deren halogenhaltige schwerbrennbare Modifikationen.
21. Vernetzte Epoxidharze, die sich von Polyepoxiden ableiten, z. B. von Bis-glycidyläthern oder von cycloaliphatischen Diepoxiden.
22. Natürliche Polymere, wie Cellulose, Gummi, Proteine, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 1–6, 13, 16 und 17 hervorzuheben, da in diesen Substraten die erfindungsgemäßen Stabilisatoren eine besonders markante Wirkung haben.

Die polymeren Stabilisatoren werden den Substraten in einer Konzentration von 0,005 bis 5 Gew.-%, berechnet auf das zu stabilisierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens eines der polymeren Lichtschutzmittels und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Die Erfindung betrifft daher auch die durch Zusatz von 0,05 bis 5 Gew.-% eines erfindungsgemäß

endgruppenblockierten polymeren Polyalkylpiperidinderivates stabilisierten Kunststoffe. Diese können in verschiedenster Form angewendet werden, z. B. als Folien, Fasern, Bändchen, Profile oder als Bindemittel für Lacke, Klebemittel oder Kitte.

Der so stabilisierte Kunststoff kann außerdem noch andere Stabilisatoren oder sonstige in der Kunststofftechnologie übliche Zusätze enthalten, wie sie beispielsweise in der DE-OS 2 349 962, Seiten 25—32, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die nachfolgenden Beispiele erläutern die Erfindung noch näher, ohne sie zu begrenzen. Die Temperaturen sind in Celsius-Graden angegeben.

## Beispiel 1

201,3 g 1-(2-Hydroxyäthyl)-2,2,6,6-tetramethyl-4-hydroxypiperidin werden mit 146,1 g Bernsteinsäuredimethylester und 3 g Tetrabutylorthotitanat in 200 ml Xylol 24 Stunden unter schwachem Stickstoffstrom auf 130—135° erwärmt, wobei langsam Methanol abdestilliert wird. Man läßt das Reaktionsgemisch auf ca. 100° abkühlen, gibt 17,2 g 2-Äthyl-2-methylcapronsäuremethylester 0,5 g Tetrabutylorthotitanat hinzu und rührt weitere 8 Stunden bei 130—135° unter Destillation des gebildeten Methanols. Das Reaktionsgemisch wird dann bei ca. 80° unter Rühren in 2 l Methanol gegossen. Die entstandene Suspension wird 2 Stunden bei Raumtemperatur gerührt, filtriert, der Rückstand mit 500 ml Methanol gewaschen und 72 Stunden unter Vakuum bei 80° getrocknet. Der erhaltene Polyester ist ein farbloses Pulver mit einem mittleren Molekulargewicht $\overline{M}_w$ —4750 (Gelchromatographie) und einem Erweichungspunkt von 120—130°.

Verwendet man anstelle von 2-Äthyl-2-methylcapronsäuremethylester 15,8 g 2-Äthyl-capronsäuremethylester und verfährt man im übrigen wie oben beschrieben, so erhält man einen farblosen Polyester mit einem mittleren Molekulargewicht $\overline{M}_w = 3000$ (Gelchromatographie) und einem Erweichungspunkt von 106—116°.

## Beispiel 2

201,3 g 1-(2-Hydroxyäthyl)-2,2,6,6-tetramethyl-4-hydroxypiperidin werden mit 146,1 g Bernsteinsäure-dimethylester und 3 g Tetrabutylorthotitanat in 200 ml Xylol 24 Stunden unter schwachem Stickstoffstrom auf 130—135° erwärmt, wobei langsam Methanol abdestilliert wird. Das Reaktionsgemisch wird mit 100 ml Xylol verdünnt und auf 50° abgekühlt. Bei dieser Temperatur wird eine Lösung von 10 g Butylisocyanat in 50 ml Xylol in 10 Minuten zugetropft und dann die Temperatur in 2 Stunden bis auf 130° erhöht. Nach dem Abkühlen des Reaktionsgemisches auf ca. 80° wird es in 2,5 l Methanol gegossen. Die entstandene Suspension wird 3 Stunden bei Raumtemperatur gerührt, filtriert, der Rückstand mit 500 ml Methanol gewaschen und 72 Stunden bei 80° unter Vakuum getrocknet. Der erhaltene Polyester ist ein farbloses Pulver mit einem mittleren Molekulargewicht $\overline{M}_w = 7300$ (Gelchromatographie) und einem Erweichungspunkt von 120—128°.

Verwendet man anstelle von Butylisocyanat 12 g Phenylisocyanat und verfährt man im übrigen wie oben beschrieben, so erhält man einen farblosen Polyester mit einem mittleren Molekulargewicht $\overline{M}_w = 6900$ (Gelchromatographie) und einem Erweichungspunkt von 115—135°.

## Beispiel 3

201,3 g 1-(2-Hydroxyäthyl)-2,2,6,6-tetramethyl-4-hydroxypiperidin werden mit 146,1 g Bernsteinsäuredimethylester und 3 g Tetrabutylorthotitanat in 200 ml Xylol 24 Stunden Stickstoffstrom auf 130—135° erwärmt, wobei langsam Methanol abdestilliert wird. Das Reaktionsgemisch wird mit 200 ml Xylol verdünnt, auf ca. 70° abgekühlt und dann langsam, unter Rühren in 3000 ml Methanol gegossen. Der entstandene Niederschlag wird abfiltriert, mit 300 ml Methanol gewaschen und im Vakuum bei 50—60° getrocknet. Der erhaltene Polyester weist ein Molekulargewicht von 4050 auf (Dampfdruck-Osmometrie).

40,5 g dieses Polyesters werden mit 1,85 g n-Dodecylamin unter schwachem Stickstoffstrom während 6 Stunden auf 200° erhitzt. Nach dem Abkühlen wird das Reaktionsprodukt in ca. 200 ml Toluol aufgenommen, von wenigen, unlöslichen Partikeln abfiltriert und die Toluollösung dann unter Vakuum vollständig eingedampft. Man erhält eine glasige Masse, die sich nach dem Abkühlen pulverisieren läßt. Der erhaltene, amidmodifizierte Polyester ist ein schwachgelbliches Pulver mit einem mittleren Molekulargewicht (Dampfdruck-Osmometrie) von 2960 und einem Erweichungspunkt

von ca. 55°.

Setzt man 40,5 g des oben hergestellten Polyesters mit 1,84 g 2,2,6,6-Tetramethyl-4-β-aminoäthyl-piperidin anstelle von n-Dodecylamin um und verfährt man im übrigen wie oben beschrieben, so erhält man einen amidterminierten Polyester als schwachgelbliches Pulver mit einem mittleren Molekulargewicht (Dampfdruck-Osmometrie) von 2400 und einem Erweichungspunkt von 65–70°.

Beispiel 4

100,7 g 1-Hydroxyläthyl-2,2,6,6-tetramethyl-4-hydroxypiperidin, 7,5 g Stearinsäuremethylester, 87,5 g Terephthalsäuredimethylester und 1,5 g Tetrabutylorthotitanat werden in 300 ml Xylol unter Stickstoffstrom aufgeheizt. Bei ca. 120° entsteht eine klare Lösung und Methanol beginnt abzudestillieren. Man hält das Reaktionsgemisch während 10 Stunden bei 130–135° bis praktisch kein Methanol mehr abdestilliert. Das Reaktionsgemisch wird unter gutem Rühren in 1500 ml Methanol gegossen. Der farblose Niederschlag wird abfiltriert, mit 300 ml Methanol gewaschen und im Vakuum bei 80° getrocknet. Der erhaltene, mit Stearinsäureestergruppen modifizierte Polyester ist ein farbloses Pulver mit einem mittleren Molekulargewicht (Dampfdruck-Osmometrie) von 2300 und einem Erweichungspunkt von 245–250°.

Verwendet man anstelle von Terephthalsäuredimethylester die gleiche Menge Isophthalsäuredimethylester und verfährt man im übrigen wie oben beschrieben, so erhält man einen endgruppenmodifizierten Polyester als farbloses Pulver mit einem mittleren Molekulargewicht von 2250 und einem Erweichungspunkt von 120–30°.

Beispiel 5

100,7 g 1-Hydroxyäthyl-2,2,6,6-tetramethyl-4-hydroxypiperidin, 82,7 g Adipinsäuredimethylester, 3,4 g Benzoesäuremethylester und 2,0 g Natriummethylat werden in 200 ml Xylol unter schwachem Stickstoffstrom langsam erwärmt. Bei ca. 120° setzt die Umesterung ein und Methanol destilliert ab. Man rührt das Reaktionsgemisch 10 Stunden bei 130–35°, verdünnt es mit 300 ml Toluol und klärt die erhaltene, schwachbräunliche Lösung. Diese wird eingedampft, der Rückstand 12 Stunden am Hochvakuum getrocknet und die erhaltene, schwachbräunliche Masse nach dem Erhalten pulverisiert. Der erhaltene, mit Benzoesäureesterendgruppen modifizierte Polyester weist ein mittleres Molekulargewicht (Dampfdruck-Osmometrie) von 2500 auf und erweicht bei 45–50°.

Beispiel 6

85,5 g 1-Hydroxyäthyl-2,2,6,6-tetramethyl-4-hydroxypiperidin, 14,0 g Laurylalkohol, 97,1 g Terephthalsäuredimethylester und 2,0 g Tetrabutylorthotitanat werden in 300 ml Xylol unter schwachem Stickstoffatom erhitzt. Bei ca. 120° fängt Methanol an abzudestillieren. Das Reaktionsgemisch wird 8 Stunden bei 130–135° gerührt bis praktisch kein Methanol mehr abdestilliert und nach dem Abkühlen in 1500 ml Methanol gegossen. Der erhaltene farblose Niederschlag wird abfiltriert, mit 200 ml Methanol gewaschen und im Vakuum bei 80° getrocknet. Der erhaltene, endgruppenmodifizierte Polyester ist ein farbloses Pulver mit einem mittleren Molekulargewicht (Dampfdruck-Osmometrie) von 2270 und einem Erweichungspunkt von 180°.

Verwendet man anstelle von Terephthalsäuredimethylester eine gleiche Menge Isophthalsäuredimethylester und verfährt man im übrigen wie oben beschrieben, so erhält man einen endgruppenmodifizierten Polyester als schwachgelbliches Pulver mit einem mittleren Molekulargewicht von 2160 und einem Erweichungspunkt von 120–30°.

Beispiel 7

Cyanurchlorid wird mit tert.-Octylamin (1,1,3,3-Tetramethylbutylamin) in üblicher Weise zum 2,4-Dichlor-6-tert.-octylamino-1,3,5-triazin umgesetzt. Smp. 80–81° nach Kristallisation aus Hexan.

Die Mischung von 11,1 g 2,4-Dichlor-6-tert.-octylamino-1,3,5-triazin, 19,7 g 1,6-Bis(2,2,6,6-tetramethyl-4-piperidylamino)hexan, 3,2 g fein pulverisiertes Natriumhydroxyd und 200 ml Toluol wird 24 Std. bei gutem Rühren unter Rückfluß gekocht. Anschließend werden 9,6 g 2-Chlor-4,6-bis[N(2,2,6,6-tetramethyl-4-piperidyl)äthylamino]1,3,5-triazin und 1 g fein pulv. Natriumhydroxyd zugegeben und den Ansatz nochmals 24 Std. gekocht. Die Mischung wird filtriert. Das Filtrat wird eingedampft und das feste Produkt aus Hexan kristallisiert.

Ähnliche Produkte erhält man, wenn man in obigem Beispiel an Stelle des 2-Chlor-4,6-bis[N(2,2,6,6-tetramethyl-4-piperidyl)äthylamino]-1,3,5-triazins äquivalente Mengen Acetylchlorid, Pivalinsäurechlorid, Benzoylchlorid, Dimethylcarbaminsäurechlorid oder p-Toluolsulfochlorid verwendet.

**Patentansprüche**

1. Verfahren zur Endgruppenblockierung von als Lichtschutzmittel verwendbaren Kondensations- und Additionspolymeren, deren wiederkehrende Struktureinheit einen Polyalkylpiperidinrest der Formel

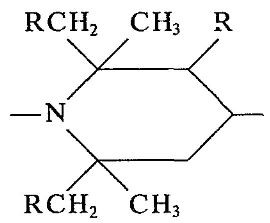
oder
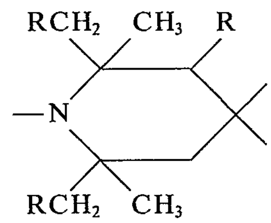

enthält oder durch eine Polyalkylpiperidin-Seitengruppe der Formel

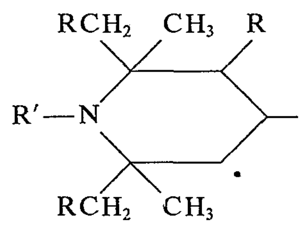
oder
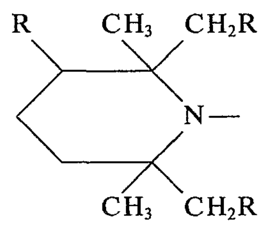

substituiert ist, worin R Wasserstoff oder Alkyl mit 1–5 C-Atomen und R' Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet, oder deren Mischpolymere, dadurch gekennzeichnet, daß man während der Herstellung des Polymeren eine monofunktionelle Verbindung zusetzt oder daß man das fertige Polymere mit einer monofunktionellen Verbindung umsetzt.

2. Verfahren gemäß Anspruch 1, dadurch gekennzeichnet, daß man als monofunktionelle Verbindung eine Monocarbonsäure oder deren Ester, Chlorid oder Anhydrid verwendet.

3. Verfahren gemäß Anspruch 1, dadurch gekennzeichnet, daß man als monofunktionelle Verbindung einen Monoalkohol oder dessen Alkaliverbindung verwendet.

4. Verfahren gemäß Anspruch 1, dadurch gekennzeichnet, daß man als monofunktionelle Verbindung ein primäres oder sekundäres Monoamin verwendet.

5. Verfahren gemäß Anspruch 1, dadurch gekennzeichnet, daß man als monofunktionelle Verbindung ein Monoisocyanat verwendet.

6. Verfahren gemäß Anspruch 1, dadurch gekennzeichnet, daß man als monofunktionelle Verbindung ein cyclisches Anhydrid einer Dicarbonsäure verwendet.

7. Verfahren gemäß Anspruch 1, dadurch gekennzeichnet, daß man als monofunktionelle Verbindung ein Monochlor-1,3,5-triazin verwendet.

8. Verfahren gemäß Anspruch 1, dadurch gekennzeichnet, daß die verwendete monofunktionelle Verbindung ein Polyalkylpiperidinderivat ist.

9. Als Lichtschutzmittel verwendbare, endgruppenblockierte Kondensations- und Additionspolymere, deren wiederkehrende Struktureinheit einen Polyalkylpiperidinrest der Formel

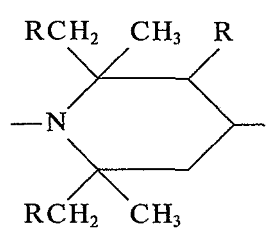
oder
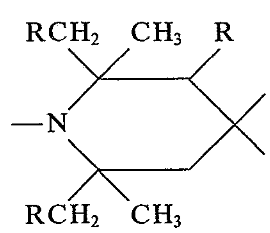

enthält oder durch eine Polyalkylpiperidin-Seitengruppe der Formel

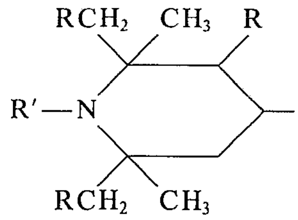

oder

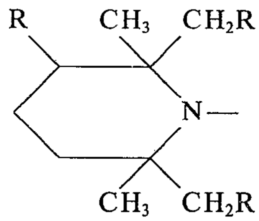

substituiert ist, worin R Wasserstoff oder Alkyl mit 1—5 C-Atomen und R' Wasserstoff, Alkyl mit 1—12 C-Atomen, Alkenyl mit 3—8 C-Atomen, Alkinyl mit 3—6 C-Atomen, Aralkyl mit 7—12 C-Atomen, Alkanoyl mit 1—8 C-Atomen oder Alkenoyl mit 3—5 C-Atomen bedeutet sowie deren Mischpolymere untereinander oder mit Polyalkylpiperidin-freien Komponenten, deren Endgruppen dadurch blockiert sind, daß bei ihrer Herstellung eine monofunktionelle Verbindung zugesetzt wurde oder daß sie nachträglich mit einer monofunktionellen Verbindung umgesetzt wurden.

10. Polymere gemäß Anspruch 9, dadurch gekennzeichnet, daß es sich um Polyester, Polyamide, Polyurethane, Polyharnstoffe, Polyäther, Polyamine oder Polyaminotriazine handelt.

11. Polymere gemäß Anspruch 9, worin R Wasserstoff und R' Wasserstoff, Alkyl mit 1—4 C-Atomen, Allyl, Benzyl oder Acetyl ist.

12. Polymere gemäß Anspruch 11, worin R Wasserstoff und R' Wasserstoff oder Methyl darstellt.

13. Polymere gemäß Anspruch 9, dadurch gekennzeichnet, daß es sich um Polyester, Polyamide oder Polyesteramide der allgemeinen Formel VIII handelt,

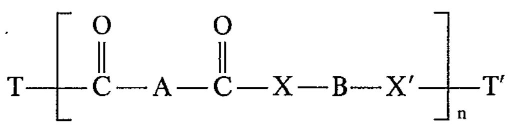

(VIII)

worin X und X' Sauerstoff oder NY bedeuten und Y Wasserstoff, Alkyl mit 1—12 C-Atomen, Cyclohexyl, Aralkyl mit 7—9 C-Atomen, Phenyl oder einen Polyalkylpiperidinrest bedeutet, A und B zweiwertige organische Reste darstellen und mindestens einer von A, B und Y einen Polyalkylpiperidinrest enthält, n einen Wert von 2 bis etwa 50 bedeutet, T eine Endgruppe der Formel —OH oder $-O(C_1-C_4\text{-Alkyl})$ ist und T' eine blockierte Endgruppe der Formel

$$-CO-R^3,\ -CO-NH-R^4,\ -SO_2-R^5,\ -CH_2CH(OH)R^6 \text{ oder } -CH_2CH(OH)-CH_2-O-R^7$$

bedeutet, worin $R^3$, $R^4$, $R^5$ $R^6$ und $R^7$ einwertige Kohlenwasserstoffreste darstellen.

14. Polymere gemäß Anspruch 13, dadurch gekennzeichnet, daß in den Formeln der blockierten Endgruppen $R^3$ Alkyl mit 1—12 C-Atomen oder Phenyl, $R^4$ Alkyl mit 1—12 C-Atomen, Cyclohexyl oder Phenyl, $R^5$ Alkyl mit 1—4 C-Atomen, Phenyl oder Tolyl, $R^6$ Wasserstoff, Methyl, Äthyl oder Phenyl und $R^7$ Alkyl mit 1—8 C-Atomen, Cyclohexyl oder Phenyl bedeutet.

15. Polymere gemäß Anspruch 9 der Formel IX

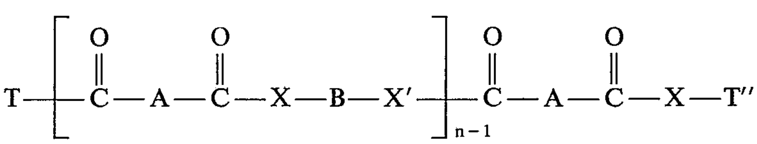

(IX)

worin X und X' Sauerstoff oder NY bedeuten und Y Wasserstoff, $C_1-C_{12}$-Alkyl, Cyclohexyl, $C_7-C_9$-Aralkyl, Phenyl oder einen Polyalkylpiperidinrest bedeutet, A und B zweiwertige organische Reste darstellen und mindestens einer von A, B und Y einen Polyalkylpiperidinrest enthält, n einen Wert von 2 bis etwa 50 bedeutet, T eine Endgruppe der Formel —OH oder $-O(C_1-C_4\text{-Alkyl})$ ist und T'' ein einwertiger Kohlenwasserstoffrest ist.

16. Polymere gemäß Anspruch 15 der Formel IX, worin T'' Alkyl mit 1—12 C-Atomen, Cyclohexyl, Benzyl, Phenyl oder Tolyl ist.

17. Verfahren zum Stabilisieren von Kunststoffen gegen Lichtabbau durch Zusatz eines polymeren Lichtschutzmittels, dadurch gekennzeichnet, daß man als Lichtschutzmittel ein Kondensations- oder Additionspolymeres verwendet, dessen wiederkehrende Struktureinheit einen Polyalkylpiperidinrest der Formel

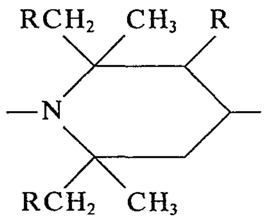

oder

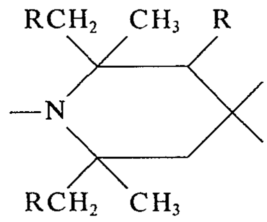

enthält oder durch eine Polyalkylpiperidin-Seitengruppe der Formel

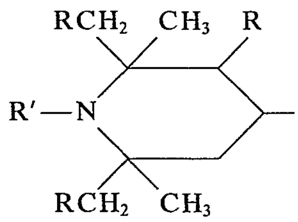

oder

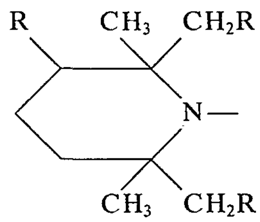

substituiert ist, worin R Wasserstoff oder Alkyl mit 1–5 C-Atomen und R' Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet, oder dessen Mischpolymeres, dessen Endgruppen dadurch blockiert sind, daß bei seiner Herstellung eine monofunktionelle Verbindung zugesetzt wurde oder daß es nachträglich mit einer monofunktionellen Verbindung umgesetzt wurde.

18. Verfahren gemäß Anspruch 17, dadurch gekennzeichnet, daß das als Lichtschutzmittel verwendete endgruppenblockierte Polymere ein Polyester, Polyamid, Polyurethan, Polyharnstoff, Polyäther, Polyamin oder Polyaminotriazin ist.

19. Verfahren gemäß Anspruch 17, dadurch gekennzeichnet, daß ein Polyolefin, ein Styrol-Polymeres, ein Polyurethan, ein Polyamid oder ein Polyester stabilisiert wird.

20. Verfahren gemäß Anspruch 17, dadurch gekennzeichnet, daß man 0,005 bis 5,0 Gew.-%, bezogen auf den zu stabilisierenden Kunststoff, des polymeren Lichtschutzmittels zusetzt.

21. Verfahren gemäß Anspruch 17, dadurch gekennzeichnet, daß man 0,01 bis 1,0 Gew.-%, bevorzugt 0,02 bis 0,5 Gew.-%, bezogen auf den zu stabilisierenden Kunststoff, des polymeren Lichtschutzmittels zusetzt.

22. Verfahren gemäß Anspruch 17, dadurch gekennzeichnet, daß man außerdem noch andere Stabilisatoren oder sonstige in der Kunststofftechnologie übliche Additive zusetzt.

23. Gegen Lichtabbau stabilisierter Kunststoff, dadurch gekennzeichnet, daß er 0,005 bis 5,0 Gew.-% (bezogen auf den zu stabilisierenden Kunststoff) eines Kondensations- oder Additionspolymeren enthält, dessen wiederkehrende Struktureinheit einen Polyalkylpiperidinrest der Formel

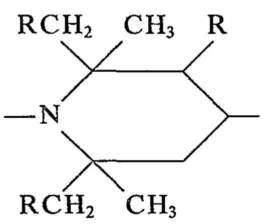

oder

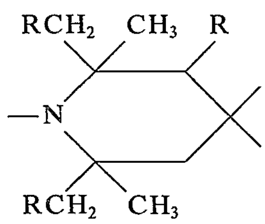

enthält oder durch eine Polyalkylpiperidin-Seitengruppe der Formel

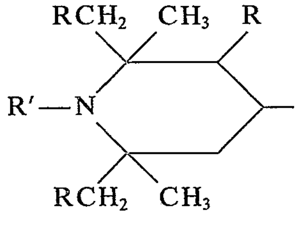

oder

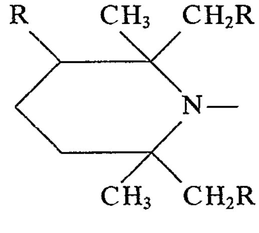

substituiert ist, worin R Wasserstoff oder Alkyl mit 1–5 C-Atomen und R' Wasserstoff, Alkyl mit 1–12 C-Atomen, Alkenyl mit 3–8 C-Atomen, Alkinyl mit 3–6 C-Atomen, Aralkyl mit 7–12 C-Atomen, Alkanoyl mit 1–8 C-Atomen oder Alkenoyl mit 3–5 C-Atomen bedeutet, oder dessen Mischpolymeres, dessen Endgruppen dadurch blockiert sind, daß bei seiner Herstellung eine monofunktionelle Verbindung zugesetzt wurde oder daß es nachträglich mit einer monofunktionelle Verbindung umgesetzt wurde.

**Claims**

1. A process for blocking the end groups of condensation and addition polymers which can be used as light stabilisers and in which the recurring structural unit contains a polyalkylpiperidine residue of the formula

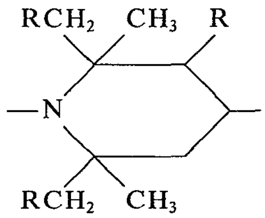

or

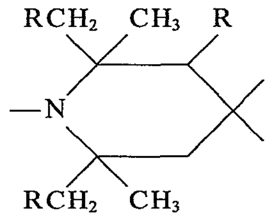

or is substituted by a polyalkylpiperidine side group of the formula

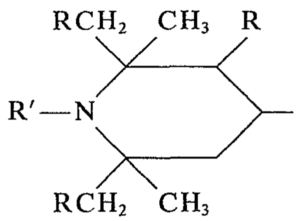

or

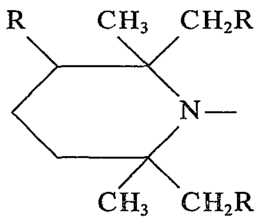

in which R is hydrogen or alkyl having 1—5 C atoms and R′ is hydrogen, alkyl having 1—12 C atoms, alkenyl having 3—8 C atoms, alkynyl having 3—6 C atoms, aralkyl having 7—12 C atoms, alkanoyl having 1—8 C atoms or alkenoyl having 3—5 C atoms, or of copolymers thereof, wherein a monofunctional compound is added during the preparation of the polymers, or the polymers are reacted, after they have been prepared, with a monofunctional compound.

2. A process according to claim 1, wherein the monofunctional compound used is a monocarboxylic acid or an ester, chloride or anhydride thereof.

3. A process according to claim 1, wherein the monofunctional compound used is a monoalcohol or an alkali metal compound thereof.

4. A process according to claim 1, wherein the monofunctional compound used is a primary or secondary monoamine.

5. A process according to claim 1, wherein the monofunctional compound used is a monoisocyanate.

6. A process according to claim 1, wherein the monofunctional compound used is a cyclic anhydride of a dicarboxylic acid.

7. A process according to claim 1, wherein the monofunctional compound used is a monochloro-1,3,5-triazine.

8. A process according to claim 1, wherein the monofunctional compound used is a polyalkylpiperidine derivative.

9. A condensation or addition polymer which has blocked end groups and can be used as a light stabiliser and in which the recurring structural unit contains a polyalkylpiperidine residue of the formula

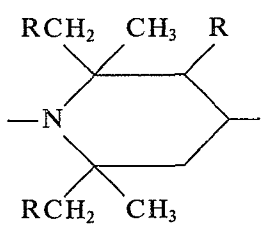

or

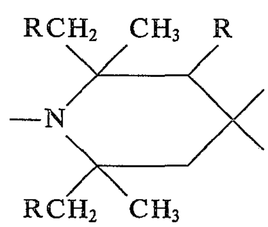

or is substituted by a polyalkylpiperidine side group of the formula

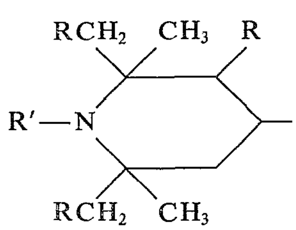

or

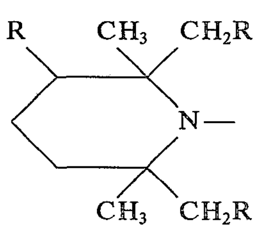

in which R is hydrogen or alkyl having 1–5 C atoms and R′ is hydrogen, alkyl having 1–12 C atoms, alkenyl having 3–8 C atoms, alkynyl having 3–6 C atoms, aralkyl having 7–12 C atoms, alkanoyl having 1–8 C atoms or alkenoyl having 3–5 C atoms, or a copolymer of such polymers with one another or with a polyalkylpiperidine-free component, the end groups of the said polymer or copolymer having been blocked by the addition of a monofunctional compound during its preparation or by its subsequent reaction with a monofunctional compound.

10. A polymer according to claim 9, which is a polyester, polyamide, polyurethane, polyurea, polyether, polyamine or polyaminotriazine.

11. A polymer according to claim 9, in which R is hydrogen and R′ is hydrogen, alkyl having 1–4 C atoms, allyl, benzyl or acetyl.

12. A polymer according to claim 11, in which R is hydrogen and R′ is hydrogen or methyl.

13. A polymer according to claim 9, which is a polyester, polyamide or polyester-amide of the general formula VIII

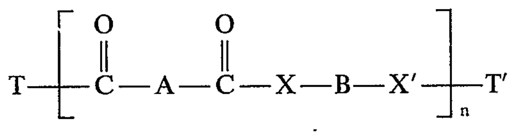

(VIII)

in which X and X′ are oxygen or NY and Y is hydrogen, alkyl having 1–12 C atoms, cyclohexyl, aralkyl having 7–9 C atoms, phenyl or a polyalkylpiperidine residue, A and B are divalent organic residues and at least one of A, B and Y contains a polyalkylpiperidine residue, n is a value from 2 to about 50, T is an end group of the formula $-OH$ or $-O(C_1-C_4$ alkyl) and T′ is a blocked end group of the formula $-CO-R^3$, $-CO-NH-R^4$, $-SO_2-R^5$, $-CH_2CH(OH)R^6$ or $-CH_2CH(OH)-CH_2-O-R^7$, in which $R^3$, $R^4$, $R^5$, $R^6$ and $R^7$ are monovalent hydrocarbon residues.

14. A polymer according to claim 13, wherein, in the formulae for the blocked end groups, $R^3$ is alkyl having 1–12 C atoms or phenyl, $R^4$ is alkyl having 1–12 C atoms, cyclohexyl or phenyl, $R^5$ is alkyl having 1 4 C atoms, phenyl or tolyl, $R^6$ is hydrogen, methyl, ethyl or phenyl and $R^7$ is alkyl having 1–8 C atoms, cyclohexyl or phenyl.

15. A polymer according to claim 9, of the formula (IX)

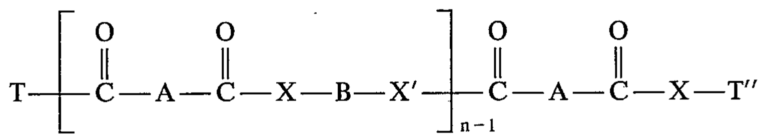

(IX)

in which X and X′ are oxygen or NY and Y is hydrogen, $C_1-C_{12}$ alkyl, cyclohexyl, $C_7-C_9$ aralkyl, phenyl or a polyalkylpiperidine residue, A and B are divalent organic residues and at least one of A, B and Y contains a polyalkylpiperidine residue, n is a value from 2 to about 50, T is an end group of the formula $-OH$ or $-O(C_1-C_4$ alkyl) and T″ is a monovalent hydrocarbon residue.

16. A polymer according to claim 15, of the formula IX, in which T″ is alkyl having 1–12 C atoms, cyclohexyl, benzyl, phenyl or tolyl.

17. A process for stabilising plastics against photodegradation, by the addition of a polymeric light stabiliser, wherein the light stabiliser used is a condensation or additon polymer in which the recurring structural unit contains a polyalkylpiperidine residue of the formula

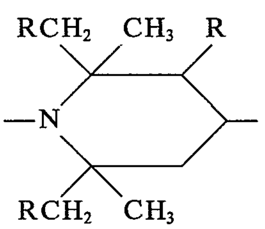

or

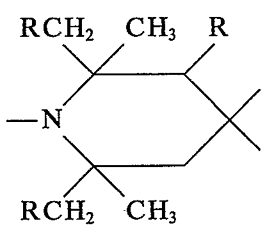

or is substituted by a polyalkylpiperidine side group of the formula

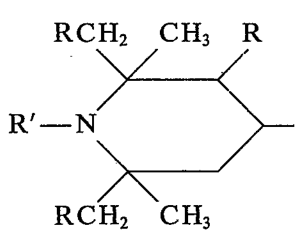

or

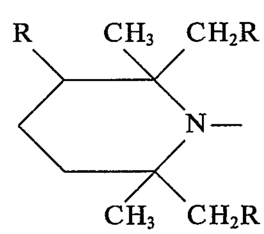

in which R is hydrogen or alkyl having 1–5 C atoms and R′ is hydrogen, alkyl having 1–12 C atoms, alkenyl having 3–8 C atoms, alkynyl having 3–6 C atoms, aralkyl having 7–12 C atoms, alkanoyl having 1–8 C atoms or alkenoyl having 3–5 C atoms, or a copolymer thereof, the end groups of the said polymer or copolymer having been blocked by the addition of a monofunctional compound during its preparation or by its subsequent reaction with a monofunctional compound.

18. A process according to claim 17, wherein the polymer having blocked end groups which is used as the light stabiliser is a polyester, polyamide, polyurethane, polyurea, polyether, polyamine or polyaminotriazine.

19. A process according to claim 17, wherein a polyolefin, a styrene polymer, a polyurethane, a polyamide or a polyester is stabilised.

20. A process according to claim 17, wherein 0.005 to 5.0% by weight, relative to the plastic to be stabilised, of the polymeric light stabiliser are added.

21. A process according to claim 17, wherein 0.01 to 1.0% by weight, preferably 0.02 to 0.5% by weight, relative to the plastic to be stabilised, of the polymeric light stabiliser is added.

22. A process according to claim 17, wherein yet further stabilisers or other additives customary in plastics technology are also added.

23. A plastic stabilised against photodegradation, which contains 0.005 to 5.0% by weight (relative to the plastic to be stabilised) of a condensation or addition polymer in which the recurring structural unit contains a polyalkylpiperidine residue of the formula

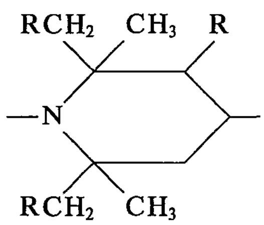

or

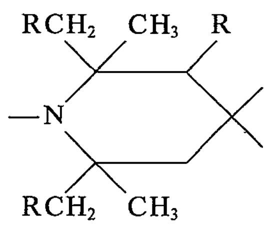

or is substituted by a polyalkylpiperidine side group of the formula

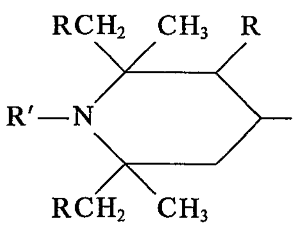

or

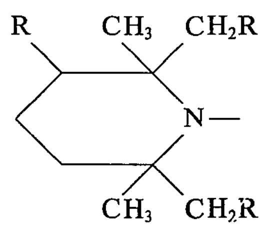

in which R is hydrogen or alkyl having 1–5 C atoms and R′ is hydrogen, alkyl having 1–12 C atoms, alkenyl having 3–8 C atoms, alkynyl having 3–6 C atoms, aralkyl having 7–12 C atoms, alkanoyl having 1–8 C atoms or alkenoyl having 3–5 C atoms, or a copolymer thereof, the end groups of the said polymer or copolymer having been blocked by the addition of a monofunctional compound during its preparation or by its subsequent reaction with a monofunctional compound.

**Revendications**

1. Procédé pour bloquer des groupes terminaux de polymères de condensation et d'addition utilisables comme stabilisants à la lumière et dont le motif contient un radical polyalkylpipéridinique répondant à l'une des formules

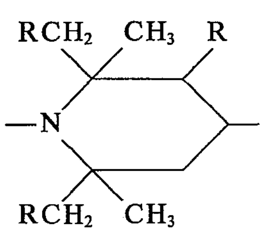

et

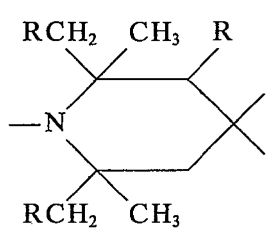

ou porte comme substituant un groupe latéral polyalkylpipéridinique répondant à l'une des formules

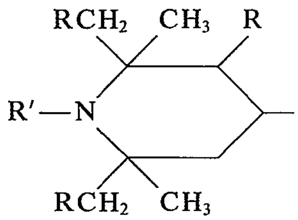

et

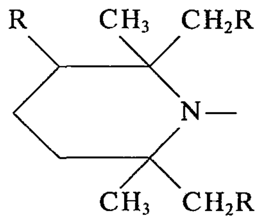

formules dans lesquelles R représente l'hydrogène ou un alkyle en $C_1-C_5$ et R' l'hydrogène, un alkyle en $C_1-C_{12}$, un alcényle en $C_3-C_8$, un alcynyle en $C_3-C_6$, un aralkyle en $C_7-C_{12}$, un alcanoyle en $C_1-C_8$ ou un alcénoyle en $C_3-C_5$,ou de copolymères comportant des motifs de ce genre, procédé caractérisé en ce qu'on ajoute un composé monofonctionnel au cours de la préparation du polymère ou en ce qu'on fait réagir le polymère fini avec un composé monofonctionnel.

2. Procédé selon la revendication 1, caractérisé en ce qu'on utilise, comme composé monofonctionnel, un acide monocarboxylique ou l'un de ses esters, chlorures ou anhydrides.

3. Procédé selon la revendication 1, caractérisé en ce qu'on utilise, comme composé monofonctionnel, un mono-alcool ou l'un de ses dérivés de métaux alcalins.

4. Procédé selon la revendication 1, caractérisé en ce qu'on utilise, comme composé monofonctionnel, une monoamine primaire ou secondaire.

5. Procédé selon la revendication 1, caractérisé en ce qu'on utilise, comme composé monofonctionnel, un mono-isocyanate.

6. Procédé selon la revendication 1, caractérisé en ce qu'on utilise, comme composé monofonctionnel, un anhydride cyclique d'acide dicarboxylique.

7. Procédé selon la revendication 1, caractérisé en ce qu'on utilise, comme composé monofonctionnel, une monochloro-triazine-1,3,5.

8. Procédé selon la revendication 1, caractérisé en ce que le composé monofonctionnel utilisé est un composé polyalkyl-pipéridinique.

9. Polymères de condensation et d'addition, utilisables comme stabilisants à la lumière, qui ont des groupes terminaux bloqués et dont le motif contient un radical polyalkylpipéridinique répondant à l'une des formules:

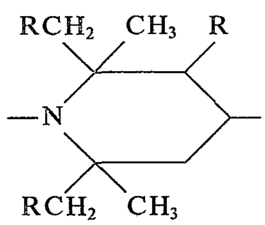

et

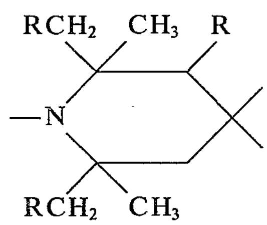

ou porte comme substituant un groupe latéral polyalkylpipéridinique répondant à l'une des formules

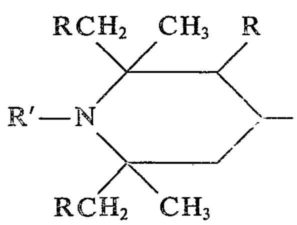

et

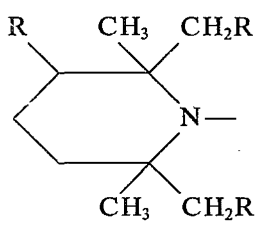

formules dans lesquelles R représente l'hydrogène ou un alkyle en $C_1-C_5$ et R' l'hydrogène, un alkyle en $C_1-C_{12}$, un alcényle en $C_3-C_8$, un alcynyle en $C_3-C_6$, un aralkyle en $C_7-C_{12}$, un alcanoyle en $C_1-C_8$ ou un alcénoyle en $C_3-C_5$,

et copolymères formés de motifs de ce genre associés entre eux ou avec des composantes dépouvues de radicaux polyalkyl-pipéridiniques, polymères et copolymères dont les groupes terminaux sont bloqués du fait qu'on a ajouté, au cours de leur préparation, un composé monofonctionnel ou du fait qu'on les a fait réagir ultérieurement avec un composé monofonctionnel.

10. Polymères selon la revendication 9, caractérisés en ce qu'ils sont des polyesters, des polyamides, des polyuréthannes des polyurées, des polyéthers des polyamines ou des poly-aminotriazines.

11. Polymères selon la revendication 9, dans lesquels R représente l'hydrogène et R' l'hydrogène, un alkyle en $C_1-C_4$, un allyle, un benzyle ou un acétyle.

12. Polymères selon la revendication 11, caractérisés en ce que R représente l'hydrogène et R'

l'hydrogène ou un méthyle.

13. Polymères selon la revendication 9, caractérisés en ce qu'ils sont des polyesters, des polyamides ou des poly-ester-amides répondant à la formule générale VIII

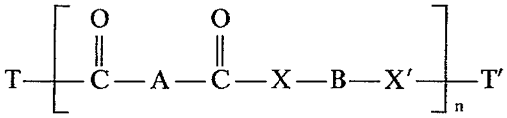

(VIII)

dans laquelle X et X' représentent chacun l'hydrogène ou un groupe NY, le symbole Y désignant l'hydrogène, un alkyle en $C_1-C_{12}$, un cyclohexyle, un aralkyle en $C_7$ ou $C_9$, un phényle ou un radical polyalkylpipéridinique, A et B représentent chacun un radical organique bivalent, au moins l'un des symboles A, B et Y devant contenir un radical polyalkylpipéridinique, n est un nombre de 2 à environ 50, T représente un groupe terminal qui est un groupe hydroxy ou un groupe alcoxy en $C_1-C_4$ et T' représente un groupe terminal bloqué répondant à l'une des formules $-CO-R^3$, $-CO-NH-R^4$, $-SO_2-R^5$, $-CH_2CH(OH)R^6$ ou $-CH_2CH(OH)-CH_2-O-R^7$ dans lesquelles $R^3$, $R^4$, $R^5$, $R^6$ et $R^7$ représentent des radicaux hydrocarbonés univalents.

14. Polymères selon la revendication 13, caractérisés en ce que, dans les formules des groupes terminaux bloqués, $R^3$ représente un alkyle en $C_1-C_{12}$ ou un phényle, $R^4$ un alkyle en $C_1-C_{12}$, un cyclohexyle ou un phényle, $R^5$ un alkyle en $C_1-C_4$, un phényle ou un tolyle, $R^6$ l'hydrogène, un méthyle, un éthyle ou un phényle, $R^7$ un alkyle en $C_1-C_8$, un cyclohexyle ou un phényle.

15. Polymères selon la revendication 9, qui répondent à la formule IX

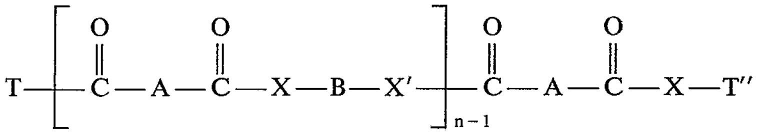

(IX)

dans laquelle X et X' représentent chacun l'oxygène ou un groupe NY dont le symbole Y représente l'hydrogène, un alkyle en $C_1-C_{12}$, un cyclohexyle, un aralkyle en $C_7-C_9$ ou un radical polyalkyl-pipéridinique, A et B représentent chacun un radical organique bivalent, au moins l'un des radicaux A, B et Y contenant un radical polyalkylpipéridinique, n est un nombre de 2 à environ 50, T représente un groupe terminal qui est un groupe hydroxy ou un radical alcoxy en $C_1-C_4$, et T'' représente un radical hydrocarboné univalent.

16. Polymères de formule IX selon la revendication 15 dans lesquels T'' représente un alkyle en $C_1-C_{12}$, un cyclohexyle, un benzyle, un phényle ou un tolyle.

17. Procédé pour stabiliser des matières plastiques contre la dégradation occasionnée par la lumière, par addition d'un stabilisant à la lumière polymère, procédé caractérisé en ce qu'on utilise, comme stabilisant à la lumière, un polymère de condensation ou d'addition dont le motif contient un radical polyalkylpipéridinique répondant à l'une des formules:

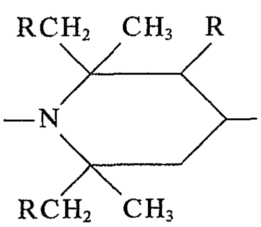

et

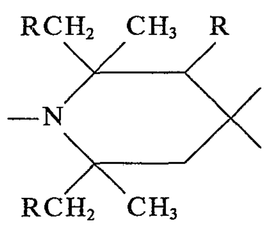

ou porte un groupe latéral polyalkylpipéridinique répondant à l'une des formules

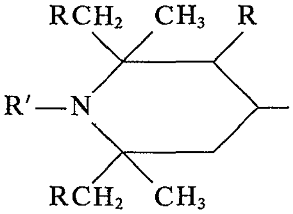

et

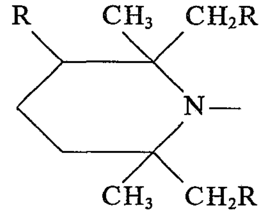

formules dans lesquelles R représente l'hydrogène ou un alkyle en $C_1-C_5$ et R' l'hydrogène, un alkyle en $C_1-C_{12}$, un alcényle en $C_3-C_8$, un alcynyle en $C_3-C_6$, un aralkyle en $C_7-C_{12}$, un alcanoyle en $C_1-C_8$ ou un alcénoyle en $C_3-C_5$,

ou un copolymère correspondant, polymère ou copolymère dont les groupes terminaux sont bloqués du fait qu'on a ajouté un composé monofonctionnel au cours de sa préparation ou du fait qu'on l'a fait

réagir ultérieurement avec un composé monofonctionnel.

18. Procédé selon la revendication 17, caractérisé en ce que le polymère à groupes terminaux bloqués que l'on utilise comme stabilisant à la lumière est un polyester, un polyamide, un polyuréthanne, une polyurée, un polyéther, une polyamine ou une poly-amino-triazine.

19. Procédé selon la revendication 17, caractérisé en ce qu'on stabilise une polyoléfine, un polymère du styrène, un polyuréthanne, un polyamide ou un polyester.

20. Procédé selon la revendication 17, caractérisé en ce qu'on ajoute de 0,005 à 5,0% en poids, par rapport à la matière plastiques à stabiliser, du stabilisant à la lumière polymère.

21. Procédé selon la revendication 17, caractérisé en ce qu'on ajoute de 0,01 à 1,0% en poids, de préférence de 0,02 à 0,5% en poids, par rapport à la matière à stabiliser, du stabilisant à la lumière polymère.

22. Procédé selon la revendication 17, caractérisé en ce qu'on ajoute en outre d'autres stabilisants ou d'autres additifs usuels dans la technologie des matières plastiques.

23. Matière plastique stabilisée contre la dégradation causée par la lumière, matière plastique caractisée en ce qu'elle contient de 0,005 à 5,0% en poids (par rapport à la matière plastique à stabiliser) d'un polymère de condensation ou d'addition dont le motif contient un radical polyalkyl-pipéridinique répondant à l'une des formules

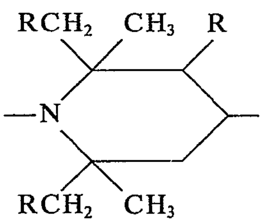

et

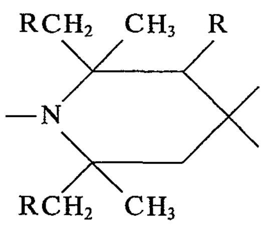

ou porte comme substituant un groupe latéral polyalkylpipéridinique répondant à l'une des formules

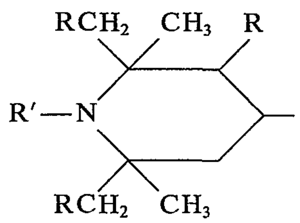

et

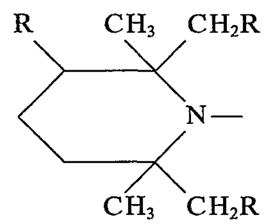

formules des lesquelles R représente l'hydrogène ou un alkyle en $C_1-C_5$ et R' l'hydrogène, un alkyle en $C_1-C_{12}$, un alcényle en $C_3-C_8$, un alcynyle en $C_3-C_6$, un aralkyle en $C_7-C_{12}$, un alcanoyle en $C_1-C_8$ ou un alcénoyle en $C_3-C_5$,
ou d'un copolymère correspondant, polymère ou copolymère dont les groupes terminaux sont bloqués du fait qu'on a ajouté un composé monofonctionnel au cours de sa préparation ou du fait qu'on l'a fait réagir ultérieurement avec un composé monofonctionnel.